# FASCICULE DE BREVET EUROPEEN

(11) **EP 4 263 346 B1**
(45) Date de publication et mention de la délivrance du brevet: **29.01.2025**
(21) Numéro de dépôt: 21836578.1
(22) Date de dépôt: 20.12.2021
(51) Int. Cl.: B64C 25/42, B64C 25/36, F16D 65/847, F16D 65/78, B60B 7/01, B60T 5/00

(54) **DISPOSITIF DE FREINAGE D'UNE ROUE D'AERONEF**
FLUGZEUGRADBREMSVORRICHTUNG
AIRCRAFT WHEEL BRAKING DEVICE

(30) Priorité: 21.12.2020 FR 2013821
(43) Date de publication de la demande: 25.10.2023
(73) Titulaire: Safran Landing Systems, 78140 Vélizy-Villacoublay (FR)
(72) Inventeur: MOLINE, Sylvain, 77550 MOISSY-CRAMAYEL (FR); HEUDE, Sébastien, 77550 MOISSY-CRAMAYEL (FR); MALADOT, Pierre, 77550 MOISSY-CRAMAYEL (FR)
(74) Mandataire: Cabinet Boettcher
(86) Numéro de dépôt international: PCT/EP2021/086887
(87) Numéro de publication internationale: WO 2022/136319

(56) Documents cités:
- US-A- 4 856 619
- US-A- 5 107 968
- US-A- 5 248 013
- US-A1- 2012 241 557
- US-A1- 2017 106 973

## Description

La présente invention concerne le domaine du freinage et plus particulièrement la maîtrise des transferts de chaleur lors des freinages.

### ARRIERE PLAN DE L'INVENTION

Un atterrisseur d'aéronef comprend généralement une jambe ayant une première extrémité reliée à une structure de l'aéronef et une deuxième extrémité pourvue d'un arbre ou essieu sur lequel une roue est montée à rotation. La roue comprend une jante reliée par un voile à un moyeu qui reçoit l'arbre de la jambe au moyen de roulements et qui définit avec la jante un espace dans lequel est disposée une pile de disques de frein. La pile de disques comporte en alternance des disques statoriques immobilisés en rotation sur un tube de torsion coaxial au moyeu de la roue et des disques rotoriques solidaires en rotation de la jante de la roue. Des actionneurs, par exemple des vérins hydrauliques, sont agencés pour exercer un effort de presse sur la pile de disques via une couronne hydraulique de manière à freiner la roue.

Le dégagement de chaleur consécutif au frottement des disques peut être important (notamment lors de l'atterrissage de l'aéronef où l'énergie à dissiper est maximale du fait de la masse et de la vitesse élevée de l'aéronef au moment de l'atterrissage) et entraîner une surchauffe du frein et de son environnement. Ce problème est abordé notamment dans le document EP-A-3702275.

Des considérations de sécurité imposent notamment une température maximale de l'ordre de 200°C au niveau du moyeu pour assurer sa tenue mécanique mais aussi éviter tout échauffement excessif des roulements et de leur système d'étanchéité pouvant engendrer une casse prématurée de ceux-ci.

Il est ainsi connu de disposer un écran thermique entre le moyeu et le tube de torsion pour protéger ledit moyeu du rayonnement thermique généré par la pile de disques.

Certains écrans thermiques s'étendent depuis le voile de la roue jusqu'à un épaulement interne du tube de torsion formant un pied de tube sur lequel les écrans thermiques sont vissés pour être maintenus en position à l'intérieur du tube de torsion.

Si de tels écrans thermiques s'avèrent efficaces, ils requièrent néanmoins que le tube de torsion soit pourvu d'un pied pour permettre leur fixation sur ledit tube de torsion, ce qui augmente la masse du tube de torsion mais aussi complexifie sa forme et donc sa fabrication, son montage et sa maintenance.

D'autres écrans thermiques ont une extrémité prise en sandwich entre la couronne hydraulique et un fond du tube de torsion, et une extrémité opposée solidarisée à un bord libre du tube de torsion par vissage via une pièce de liaison. Ces écrans thermiques s'étendent sur toute la longueur du tube de torsion, ce qui tend à augmenter l'échauffement dudit tube de torsion. Qui plus est, l'existence de la pièce de liaison reliant l'écran thermique au bord libre du tube de torsion a pour effet d'augmenter le coût et la masse de l'ensemble.

Par ailleurs, de tels écrans thermiques requièrent l'utilisation d'outils pour visser l'écran thermique au tube de torsion, ce qui engendre une préparation et un temps de montage non négligeable.

Le document US 5 107 968 A divulgue un dispositif de freinage multidisque pour aéronef, comprenant un écran thermique cylindrique en nid d'abeille fixé aux cannelures d'un tube de torsion via des vis, ou fixé à une bride qui s'étend à partir d'un palier annulaire monté sur un essieu fixe.

### OBJET DE L'INVENTION

L'invention a donc pour objet de proposer un écran thermique permettant d'obvier au moins en partie aux problèmes précités.

### RESUME DE L'INVENTION

En vue de la réalisation de cet objet, l'invention propose un dispositif de freinage d'une roue d'aéronef dont un moyeu est monté à rotation sur un essieu. Le dispositif comprend une pile de disques enfilée sur un tube de torsion qui est destiné à être fixé à l'essieu et équipé intérieurement d'un écran thermique destiné à s'étendre en regard d'une surface extérieure du moyeu tournée vers la pile de disques pour protéger ledit moyeu d'un rayonnement thermique généré par la pile de disques.

Selon l'invention, l'écran thermique comprend un corps tubulaire coaxial au tube de torsion et une pluralité de pattes de maintien élastiquement déformables solidaires du corps tubulaire, chacune des pattes de maintien et une surface intérieure du tube de torsion comportant des reliefs complémentaires pour coopérer ensemble de manière à immobiliser axialement l'écran thermique à l'intérieur du tube de torsion.

L'écran thermique est ainsi retenu élastiquement dans le tube de torsion. Les pattes de maintien permettent donc un montage sans outil de l'écran thermique à l'intérieur du tube de torsion mais aussi d'en diminuer le temps de montage tout en limitant le coût et la masse de l'ensemble.

Selon une caractéristique particulière, le corps tubulaire est destiné à s'étendre depuis un voile de la roue et un bord libre du moyeu.

Ainsi, l'écran thermique ne recouvre qu'en partie la surface intérieure du tube de torsion, ce qui tend à limiter l'échauffement dudit tube de torsion lors du freinage.

De manière particulière, le corps tubulaire comprend des emboutis en forme de calottes sphérique tournées vers la surface intérieure du tube de torsion pour former des contacts ponctuels avec ladite surface intérieure du tube.

Ces emboutis permettent d'assurer la tenue mécanique de l'écran thermique tout en limitant la conduction thermique entre le corps principal et le tube de torsion.

Selon une caractéristique particulière, les pattes de maintien sont équitablement réparties autour de l'axe central du corps tubulaire.

De manière particulière, la surface intérieure du tube de torsion comprend un redan en saillie radiale et chacune des pattes de maintien un relief d'accrochage dudit redan et, de préférence, au moins l'une des pattes de maintien comprend une rainure transversale agencée pour coopérer simultanément une face avant et une face arrière du redan.

Avantageusement, la rainure a une profondeur inférieure à une hauteur du redan de telle manière que ladite patte de maintien est décollée de la surface intérieure du tube de torsion limitant la conduction thermique entre l'écran et le tube de torsion.

De manière particulière, au moins l'une des pattes de maintien comprend une portion terminale inclinée formant une rampe sur laquelle le redan prend appui et glisse lors de l'introduction de l'écran thermique dans le tube de torsion en provoquant la déformation élastique de la patte de maintien jusqu'à laisser passer le redan.

De manière particulière, les pattes de maintien définissent un diamètre inférieur à un diamètre intérieur du tube de torsion et supérieur au diamètre extérieur du corps tubulaire.

De manière particulière, au moins l'une des pattes de maintien est venue de matière avec le corps principal.

L'invention concerne également une roue d'aéronef équipée d'un tel dispositif de freinage.

L'invention concerne aussi un train d'atterrissage d'aéronef comportant au moins une telle roue.

L'invention concerne en outre un aéronef équipé d'un tel train d'atterrissage.

### BREVE DESCRIPTION DES DESSINS

L'invention sera mieux comprise à la lumière de la description qui suit, laquelle est purement illustrative et non limitative, et doit être lue en regard des dessins annexés parmi lesquels :
- la figure 1 est une vue en coupe axiale d'une roue équipé d'un dispositif de freinage selon un mode de réalisation particulier de l'invention ;
- la figure 2 est une vue en perspective du tube de torsion et de l'écran thermique du dispositif de freinage illustré à la figure 1 ;
- la figure 3 est une vue en perspective de l'écran thermique illustré à la figure 2 en position à l'intérieur du tube de torsion ;
- la figure 4 est une vue de détail de l'une des pattes de maintien de l'écran thermique illustré à la figure 2 ;
- la figure 5 représente schématiquement l'emboîtement élastique de la patte de maintien illustré à la figure 4 sur le tube de torsion ; et
- la figure 6 est une vue de détail d'une variante de la patte de maintien illustrée à la figure 4.

### DESCRIPTION DETAILLEE DE L'INVENTION

L'invention est ici décrite en application à un aéronef comportant au moins un atterrisseur principal ayant une jambe dont une première extrémité est articulée à une structure de l'aéronef et une deuxième extrémité est pourvue d'un essieu sur lequel au moins une roue est montée à rotation.

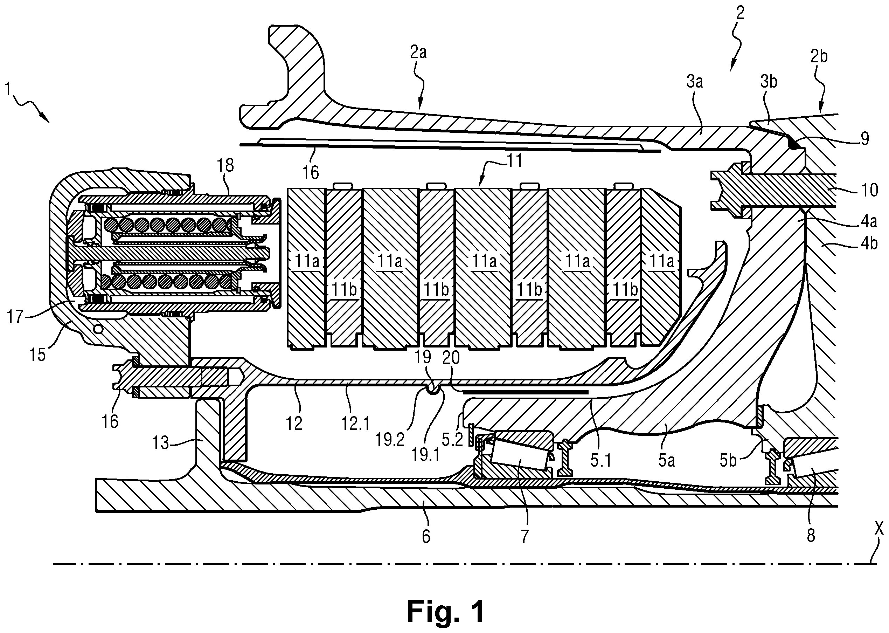

En référence à la figure 1, l'invention concerne un dispositif de freinage, généralement désigné en 1, équipant la roue 2 de l'atterrisseur principal de l'aéronef.

La roue 2 comprend deux demi-roues 2a, 2b qui comportent chacune une jante 3a, 3b annulaire reliée par un voile 4a, 4b à un demi-moyeu 5a, 5b reçu à pivotement sur un essieu ou fusée 6 au moyen d'un roulement 7, 8. La demi-roue 2a comporte un logement ménagé sur un bord de la jante 3a et dans lequel est agencé un joint d'étanchéité 9 pour que celui-ci soit élastiquement comprimé entre les demi-roues 2a, 2b une fois celles-ci assemblées.

Les demi-roues 2a, 2b sont rapprochées suivant une direction parallèle à un axe X de rotation de la roue 2 et comportent des portées de centrage pour assurer le bon positionnement relatif des demi-roues 2a, 2b. Les demi-roues 2a, 2b sont maintenues en position par des boulons 10 s'étendant dans des orifices percés en regard dans les voiles 4a, 4b.

De façon connue en soi, les boulons 10 sont vissés et serrés pour assembler les demi-roues 2a, 2b après montage d'un pneumatique (non représenté) sur les jantes 3a, 3b. Dans cette position, le joint d'étanchéité 9 est élastiquement comprimé entre les demi-roues 2a, 2b et empêche ainsi le gaz contenu dans un volume délimité par le pneumatique et les demi-roues 2a, 2b de s'échapper vers l'extérieur de la roue 2.

Le dispositif de freinage 1 comprend des disques 11 de frein, dont des disques stators 11a et des disques rotors 11b, qui sont empilés alternativement les uns contre les autres sur un tube de torsion 12 fixé à une collerette 13 de l'essieu. Le tube de torsion 12 et la pile de disques 11 s'étendent à l'intérieur de la demi-roue 2a dans un espace annulaire délimité par une surface intérieure de la jante 3a, le voile 4a et une surface extérieure du demi-moyeu 5a s'étendant en regard de la surface intérieure de la jante 3a.

Les disques stators 11a sont fixes en rotation par rapport à l'essieu 6 et les disques rotors 11b comportent des encoches périphériques axiales recevant chacune un tronçon d'une barrette (non visible sur la figure) fixée sur la surface intérieure de la jante 3a. Les barrettes s'étendent selon un axe parallèle à l'axe X de rotation de la roue 2 et assurent un couplage en rotation des disques rotors 11b avec la jante 3a autour dudit axe X.

Le dispositif de freinage 1 comprend en outre une couronne 15 hydraulique fixée à une extrémité du tube de torsion 12 au moyen de vis 16. La couronne 15 comprend une pluralité de cavités 17 réparties ici équitablement autour de l'axe X de rotation de la roue 2. Chacune des cavités 17 reçoit un actionneur 18 exerçant sélectivement un effort de freinage contre un premier disque stator 11a de la pile de disques 11 via un fluide hydraulique sous pression circulant à l'intérieur de la couronne 15. La répartition en anneau des actionneurs 18 permet de répartir équitablement l'effort de freinage sur toute la surface du premier disque stator 11a.

Le dispositif de freinage 1 est équipé d'un écran thermique 20 tubulaire s'étendant coaxialement au tube de torsion entre une surface intérieure 12.1 cylindrique dudit tube de torsion 12 et une surface extérieure 5.1 du demi-moyeu 5a tournée vers la pile de disques 11 pour protéger ledit demi-moyeu 5a du rayonnement thermique engendré par le frottement des disques 11 lors d'un freinage de la roue 2.

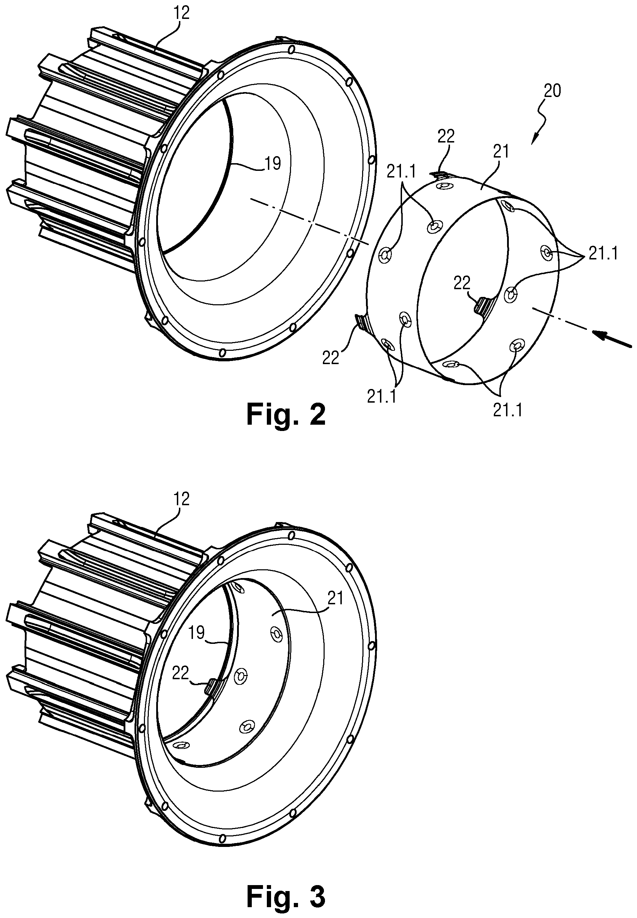

Comme illustré aux figures 2 et 3, l'écran thermique 20 comprend un corps principal 21 de forme cylindrique ayant un diamètre extérieur légèrement inférieur au diamètre de la surface intérieure 12.1 du tube de torsion 12. Le corps principal 21 s'étend du voile jusqu'à un bord libre 5.2 du demi-moyeu 5a de sorte que l'écran thermique 20 ne recouvre qu'en partie la surface intérieure 12.1 du tube de torsion 12. Le corps principal 21 comporte une pluralité d'emboutis 21.1 ici symétriquement répartis autour de l'axe central du corps principal 21. Les emboutis 21.1 sont en forme de calottes sphériques à convexité orientée vers la surface intérieure 12.1 du tube de torsion 12 et forment des contacts ponctuels avec ladite surface intérieure 12.1 du tube de torsion 12 pour assurer la tenue mécanique de l'écran thermique 20 tout en limitant la conduction thermique entre le corps principal 21 et le tube de torsion 12.

L'écran thermique 20 comprend également trois pattes de maintien 22 élastiquement déformables qui sont en appui contre un redan 19 annulaire s'étendant en saillie radiale de la surface intérieure 12.1 du tube de torsion 12 pour maintenir élastiquement l'écran thermique 20 en position à l'intérieur du tube de torsion 12.

Le redan 19 comprend une face avant 19.1 et une face arrière 19.2 qui sont toute deux de forme tronconique et qui sont réunies par leur grande base.

Les pattes de maintien 22 s'étendent globalement en saillie axiale d'un bord du corps principal 21 vers la couronne 15 hydraulique et sont ici équitablement réparties autour de ce bord.

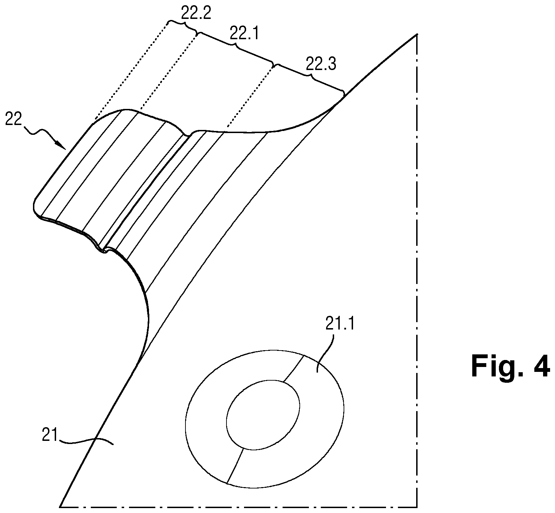

Conformément à la figure 4, les pattes de maintien 22 sont agencées pour s'escamoter élastiquement au contact du redan 19 lors de l'introduction de l'écran thermique 20 dans le tube de torsion 12, et pour s'opposer au déplacement axial du corps principal 21 une fois l'écran thermique 20 en position dans ledit tube de torsion 12. A cette fin, les pattes de maintien 22 ont une portion centrale 22.1 globalement rectiligne pourvue en son milieu d'un embouti formant une rainure 23 transversale agencée pour avoir des flancs coopérant simultanément et respectivement avec la face avant 19.1 et la face arrière 19.2 du redan 19, et une portion terminale 22.2 inclinée qui forme une rampe sur laquelle la face avant 19.1 du redan 19 prend appui et glisse lors de l'introduction de l'écran thermique 20 dans le tube de torsion 12 en provoquant la déformation élastique des pattes de maintien 22 jusqu'à laisser passer le redan 19. Les flancs de la rainure 23 et les faces 19.1, 19.2 du redan 19 forment avec l'axe central un angle supérieur à celui formé entre la portion terminale 22.2 et ledit axe central de telle manière que Les flancs de la rainure 23 et/ou les faces 19.1, 19.2 du redan 19 ne puissent servir de rampe facilitant une déformation des pattes de maintien 22 vers l'axe central lorsqu'un effort axial est exercé sur l'écran thermique 20.

Les pattes de maintien 22 ont également une portion de liaison 22.3 reliant la portion centrale 22.1 au bord du corps principal 21.

On notera que la rainure 23 a une profondeur inférieure à la hauteur du redan 19 de sorte que les flancs de la rainure soient plaqués contre les faces avant et arrière du redan 19 respectivement lorsque l'écran thermique 20 est en position dans le tube de torsion, et que, lorsque les pattes de maintien 22 sont dans un état de repos, les portions centrales 22.1 des pattes de maintien 22 ont un diamètre extérieur légèrement supérieur à celui du corps principal 21 et légèrement inférieur au diamètre de la surface intérieure 12.1 du tube de torsion 12, de sorte que les pattes de maintien 22 sont en contact avec le tube de torsion 12 uniquement au niveau des rainures 23, ce qui permet de limiter toute détérioration du tube de torsion 12 lors de son fonctionnement.

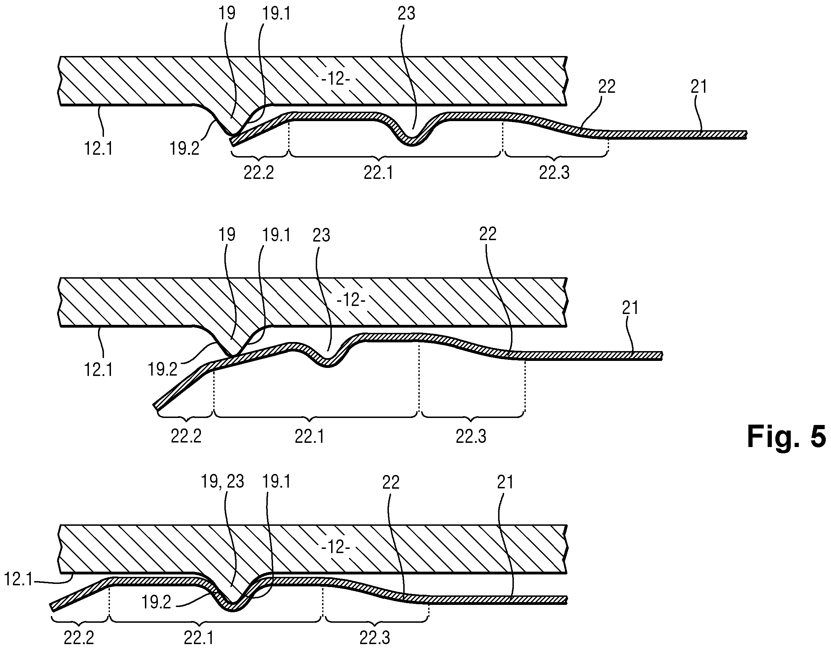

Le montage de l'écran thermique 20 sur le tube de torsion 12 va maintenant être détaillé en regard de la figure 5.

L'écran thermique 20 est tout d'abord introduit à l'intérieur du tube de torsion 12 coaxialement à celui-ci jusqu'à ce que les portions terminales 22.2 des pattes de maintien 22 viennent en contact avec la face avant 19.1 du redan 19 du tube de torsion 12. En poursuivant l'insertion de l'écran thermique 20 dans le tube de torsion 12, le redan 19 exerce sur les portions terminales 22.2 un effort radial tendant à déformer les pattes de maintien 22 pour amener les pattes de maintien 22 vers l'axe central jusqu'à ce que le redan 19 s'engage dans les rainures 23 immobilisent axialement le corps principal 21 à l'intérieur du tube de torsion 12.

Si l'inclinaison des portions terminales 22.2 permet de faciliter le montage de l'écran thermique 20, on remarquera qu'elle permet aussi d'en faciliter le démontage. En effet, l'opérateur pourra aisément déformer les pattes de maintien en exerçant un effort axial sous les portions terminale 22.2, et ainsi libérer le redan 19 des rainures 23 tout en exerçant un effort d'extraction sur l'écran thermique 20.

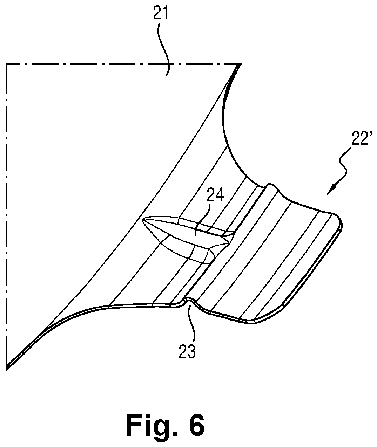

La figure 6 illustre une patte de maintien 22' qui n'est autre qu'une variante de la patte de maintien 22 illustrée à la figure 4. La patte de maintien 22' diffère de la patte de maintien 22 en ce qu'elle comprend un raidisseur 24 formé par un embouti s'étendant entre le bord du corps principal 21 et la rainure 23 afin d'augmenter sa rigidité.

Bien entendu, l'invention n'est pas limitée au mode de réalisation décrit mais englobe toute variante entrant dans le champ de l'invention telle que définie par les revendications.

L'écran thermique 20 peut être réalisé en un matériau thermiquement isolant comme par exemple en acier, en inox, en titane...

La forme, le nombre, la répartition et les dimensions des pattes de maintien 22 ,22' peuvent différer de celles illustrées.

Au lieu d'une rainure 23, les pattes de maintien 22, 22' peuvent être pourvues d'un redan en saillie radiale vers l'extérieur pour s'accrocher derrière le redan 19. Il est possible de prévoir que le redan de certaines pattes prenne appui contre la face avant du redan 19 et que d'autres pattes prennent appui contre la face arrière du redan 19.

La forme et les dimensions du redan 19 peuvent différer de celui illustré. Les angles formés par les faces 19.1, 19.2 du redan 19 avec l'axe central du corps principal 21 peuvent notamment ne pas être égaux et/ou être différents de ceux illustrés à la figure 6. En particulier, l'angle formé entre la face avant 19.1 et l'axe central pourra être compris :
- entre 5 et 45 degrés de manière à former une pente dite « douce » et ainsi plus ou moins faciliter le montage de l'écran thermique 20 sur le tube de torsion 12 ; ou
- entre 45 et 90 degrés de manière à former une pente dite « forte » et ainsi rendre plus ou moins difficile le montage de l'écran thermique 20 sur le tube de torsion 12.

De manière similaire, l'angle formé entre la face arrière 19.2 et l'axe central pourra être compris :
- entre 5 et 45 degrés de manière à plus ou moins faciliter le démontage de l'écran thermique 20 ; ou
- entre 45 et 90 degrés de manière à rendre plus ou moins difficile le démontage de l'écran thermique 20.

A l'inverse, une gorge peut être ménagée dans la surface intérieure du tube de torsion 12 et les pattes de maintien 22, 22' peuvent être pourvues d'un redan en saillie radiale vers l'extérieur pour pénétrer dans ladite gorge et assurer l'immobilisation de l'écran thermique 20 dans le tube de torsion 12.

Les pattes de maintien peuvent être découpées dans le corps tubulaire en retrait du bord de celui-ci.

Bien qu'ici les pattes de maintien 22, 22' soient venues de matière avec le corps principal 21, elles peuvent aussi être rapportées audit corps principal 21.

Le nombre, la forme et l'emplacement du raidisseur 24 peut être différent de celui illustré à la figure 6.

## Revendications

1. Dispositif de freinage (1) d'une roue (2) d'aéronef dont un moyeu (5a, 5b) est monté à rotation sur un essieu (6), le dispositif comprenant une pile de disques (11) enfilée sur un tube de torsion (12) qui est destiné à être fixé à l'essieu et équipé intérieurement d'un écran thermique (20) destiné à s'étendre en regard d'une surface extérieure (5.1) du moyeu tournée vers la pile de disques pour protéger ledit moyeu d'un rayonnement thermique généré par la pile de disques, l'écran thermique comprenant un corps tubulaire (21) coaxial au tube de torsion, le dispositif de freinage étant **caractérisé en ce que** l'écran thermique comprend en outre une pluralité de pattes de maintien (22) élastiquement déformables solidaires du corps tubulaire, chacune des pattes de maintien et une surface intérieure (12.1) du tube de torsion comportant des reliefs complémentaires pour coopérer ensemble de manière à immobiliser axialement l'écran thermique à l'intérieur du tube de torsion.

2. Dispositif de freinage (1) selon la revendication 1, dans lequel le corps tubulaire (21) est destiné à s'étendre depuis un voile (4a, 4b) de la roue et un bord libre (5.2) du moyeu (5a, 5b).

3. Dispositif de freinage (1) selon la revendication 2, dans lequel le corps tubulaire (21) comprend des emboutis (21.1) en forme de calottes sphérique tournées vers la surface intérieure (12.1) du tube de torsion (12) pour former des contacts ponctuels avec ladite surface intérieure du tube.

4. Dispositif de freinage (1) selon l'une quelconque des revendications précédentes, dans lequel les pattes de maintien (22) sont équitablement réparties autour de l'axe central du corps tubulaire (21).

5. Dispositif de freinage (1) selon l'une quelconque des revendications précédentes, dans lequel la surface intérieure (12.1) du tube de torsion comprend un redan (19) en saillie radiale et chacune des pattes de maintien (22) un relief d'accrochage dudit redan.

6. Dispositif de freinage (1) selon la revendication 5, dans lequel au moins l'une des pattes de maintien (22) comprend une rainure (23) transversale agencée pour coopérer simultanément avec une face avant (19.1) et une face arrière (19.2) du redan (19).

7. Dispositif de freinage (1) selon la revendication 5 ou la revendication 6, dans lequel la rainure (23) a une profondeur inférieure à une hauteur du redan de telle manière que ladite patte de maintien (22) est décollée de la surface intérieure du tube de torsion.

8. Dispositif de freinage (1) selon l'une quelconque des revendications 5 à 7, dans lequel au moins l'une des pattes de maintien (22) comprend une portion terminale (22.2) inclinée formant une rampe sur laquelle le redan (19) prend appui et glisse lors de l'introduction de l'écran thermique (20) dans le tube de torsion (12) en provoquant la déformation élastique de la patte de maintien jusqu'à laisser passer le redan.

9. Dispositif de freinage (1) selon l'une quelconque des revendications 5 à 8, dans lequel les pattes de maintien (22) définissent un diamètre inférieur à un diamètre intérieur du tube de torsion (12) et supérieur au diamètre extérieur du corps tubulaire (21).

10. Dispositif de freinage (1) selon l'une quelconque des revendications précédentes, dans lequel au moins l'une des pattes de maintien (22) est venue de matière avec le corps principal (21).

11. Roue (2) d'aéronef équipé d'un dispositif de freinage (1) selon l'une quelconque des revendications précédentes.

12. Train d'atterrissage d'aéronef comprenant au moins une roue (2) selon la revendication 11.

13. Aéronef comportant au moins un train d'atterrissage selon la revendication 12.

## Patentansprüche

1. Bremsvorrichtung (1) für ein Luftfahrzeug-Rad (2) mit einer drehbar auf einer Achse (6) montierten Nabe (5a, 5b), wobei die Vorrichtung einen Scheibenstapel (11) umfasst, der auf ein Torsionsrohr (12) aufgeschoben ist, das dazu bestimmt ist, an der Achse befestigt zu werden, und das innenseitig mit einem Hitzeschild (20) ausgestattet ist, der dazu bestimmt ist, sich einer dem Scheibenstapel zugewandten Außenfläche (5.1) der Nabe gegenüberliegend zu erstrecken, um die Nabe vor einer durch den Scheibenstapel erzeugten Wärmestrahlung zu schützen, wobei der Hitzeschild einen zu dem Torsionsrohr koaxialen, rohrförmigen Körper (21) umfasst, wobei die Bremsvorrichtung **dadurch gekennzeichnet ist, dass** der Hitzeschild ferner eine Mehrzahl von elastisch verformbaren Haltelaschen (22) umfasst, die fest mit dem rohrförmigen Körper verbunden sind, wobei eine jede der Haltelaschen und eine Innenfläche (12.1) des Torsionsrohrs komplementäre Reliefstrukturen aufweisen, durch deren Zusammenwirken der Hitzeschild axial im Inneren des Torsionsrohrs fest in Position gehalten wird.

2. Bremsvorrichtung (1) nach Anspruch 1, wobei der rohrförmige Körper (21) dazu bestimmt ist, sich ausgehend von einer Radscheibe (4a, 4b) des Rades und von einem freien Rand (5.2) der Nabe (5a, 5b) weg zu erstrecken.

3. Bremsvorrichtung (1) nach Anspruch 2, wobei der rohrförmige Körper (21) Prägungen (21.1) in Form von Kugelkalotten aufweist, welche der Innenfläche (12.1) des Torsionsrohrs (12) zugewandt sind, um Punktkontakte mit der Innenfläche des Rohrs zu bilden.

4. Bremsvorrichtung (1) nach einem der vorhergehenden Ansprüche, wobei die Haltelaschen (22) gleichmäßig um die Mittelachse des rohrförmigen Körpers (21) herum verteilt sind.

5. Bremsvorrichtung (1) nach einem der vorhergehenden Ansprüche, wobei die Innenfläche (12.1) des Torsionsrohrs eine radial hervorstehende Stufe (19) umfasst und eine jede der Haltelaschen (22) ein Relief zum Ineingriffbringen mit dieser Stufe umfasst.

6. Bremsvorrichtung (1) nach Anspruch 5, wobei zumindest eine der Haltelaschen (22) eine Quernut (23) umfasst, die dafür ausgelegt ist, zugleich mit einer Vorderseite (19.1) und mit einer Rückseite (19.2) der Stufe (19) zusammenzuwirken.

7. Bremsvorrichtung (1) nach Anspruch 5 oder nach Anspruch 6, wobei eine Tiefe der Nut (23) geringer ist als eine Höhe der Stufe, sodass die Haltelasche (22) von der Innenfläche des Torsionsrohrs abgehoben ist.

8. Bremsvorrichtung (1) nach einem der Ansprüche 5 bis 7, wobei zumindest eine der Haltelaschen (22) einen als Rampe dienenden, geneigten Endabschnitt (22.2) umfasst, auf welchem sich die Stufe (19) abstützt und entlanggleitet, wenn der Hitzeschild (20) in das Torsionsrohr (12) eingeführt wird, wobei die Haltelasche dabei so weit elastisch verformt wird, bis die Stufe hindurchpasst.

9. Bremsvorrichtung (1) nach einem der Ansprüche 5 bis 8, wobei die Haltelaschen (22) einen Durchmesser definieren, der kleiner als ein Innendurchmesser des Torsionsrohrs (12) und größer als ein Außendurchmesser des rohrförmigen Körpers (21) ist.

10. Bremsvorrichtung (1) nach einem der vorhergehenden Ansprüche, wobei zumindest eine der Haltelaschen (22) einstückig mit dem Hauptkörper (21) ausgebildet ist.

11. Luftfahrzeug-Rad (2), das mit einer Bremsvorrichtung (1) nach einem der vorhergehenden Ansprüche ausgestattet ist.

12. Luftfahrzeug-Fahrwerk, welches zumindest ein Rad (2) nach Anspruch 11 umfasst.

13. Luftfahrzeug, welches zumindest ein Fahrwerk nach Anspruch 12 umfasst.

## Claims

1. Device (1) for braking a wheel (2) of an aircraft (2), a hub (5a, 5b) of which is mounted rotatably on an axle (6), the device comprising a stack of discs (11) threaded on a torque tube (12) which is intended to be attached to the axle and equipped internally with a heat shield (20) which is intended to extend opposite an outer surface (5.1) of the hub facing the stack of discs to protect said hub from heat radiation generated by the stack of discs, the heat shield comprising a tubular body (21) coaxial to the torque tube, the braking device being **characterized in that** the heat shield also comprises a plurality of retaining tabs (22) which are resiliently deformable and secured to the tubular body, each of the retaining tabs and an inner surface (12.1) of the torque tube comprising additional raised portions to engage with one another so as to axially immobilise the heat shield inside the torque tube.

2. Braking device (1) according to claim 1, wherein the tubular body (21) is intended to extend from a web (4a, 4b) of the wheel and a free edge (5.2) of the hub (5a, 5b).

3. Braking device (1) according to claim 2, wherein the tubular body (21) comprises spherical cap-shaped stamps (21.1) facing the inner surface (12.1) of the torque tube (12) to form punctual contacts with said inner surface of the tube.

4. Braking device (1) according to any one of the preceding claims, wherein the retaining tabs (22) are evenly distributed about the central axis of the tubular body (21).

5. Braking device (1) according to any one of the preceding claims, wherein the inner surface (12.1) of the torque tube comprises a radially projecting step (19) and each of the tabs (22) for retaining a fastening raised portion of said step.

6. Braking device (1) according to claim 5, wherein at least one of the retaining tabs (22) comprises a transverse groove (23) arranged to simultaneously engage with a front face (19.1) and a rear face (19.2) of the step (19).

7. Braking device (1) according to claim 5 or claim 6, wherein the groove (23) has a depth less than a height of the step, such that said retaining tab (22) is removed from the inner surface of the torque tube.

8. Braking device (1) according to any one of claims 5 to 7, wherein at least one of the retaining tabs (22) comprises an inclined end portion (22.2) forming a ramp on which the step (19) bears and slides during the introduction of the heat shield (20) in the torque tube (12) by causing the resilient deformation of the retaining tab until passing the step.

9. Braking device (1) according to any one of claims 5 to 8, wherein the retaining tabs (22) define a diameter less than an inner diameter of the torque tube (12) and greater than the outer diameter of the tubular body (21).

10. Braking device (1) according to any one of the preceding claims, wherein at least one of the retaining tabs (22) is formed integrally with the main body (21).

11. Aircraft wheel (2) equipped with a braking device (1) according to any one of the preceding claims.

12. Aircraft landing gear comprising at least one wheel (2) according to claim 11.

13. Aircraft comprising at least one landing gear according
